(19) Europäisches Patentamt
European Patent Office
Office européen des brevets

(11) **EP 4 138 432 A1**

(12) **EUROPEAN PATENT APPLICATION**
published in accordance with Art. 153(4) EPC

(43) Date of publication:
**22.02.2023 Bulletin 2023/08**

(21) Application number: **20918901.8**

(22) Date of filing: **13.02.2020**

(51) International Patent Classification (IPC):
*H04W 8/22* (2009.01)    *H04W 16/26* (2009.01)
*H04W 16/28* (2009.01)    *H04W 92/20* (2009.01)
*H04W 28/06* (2009.01)

(52) Cooperative Patent Classification (CPC):
**H04W 8/22; H04W 16/26; H04W 16/28;**
**H04W 28/06; H04W 92/20**

(86) International application number:
**PCT/JP2020/005633**

(87) International publication number:
**WO 2021/161467 (19.08.2021 Gazette 2021/33)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **KURITA Daisuke**
  **Tokyo 100-6150 (JP)**
• **HARADA Hiroki**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **WIRELESS COMMUNICATION NODE**

(57)    A radio communication node (100A) recognizes whether or not a lower node (100B) includes at least one of a plurality of transceivers or a plurality of antenna panels by implicit or explicit notification from the lower node (100B).

## FIG. 2

(TRANSCEIVER/ANTENNA PANEL IMPLEMENTATION, TA TYPE)

**Description**

Technical Field

The present invention relates to a radio communication node that sets up radio access and radio backhaul.

Background Art

The 3rd Generation Partnership Project (3GPP) has specified Long Term Evolution (LTE), and for the purpose of further increasing the speed of the LTE, LTE-Advanced (hereinafter referred to as LTE including LTE-Advanced), and furthermore, 5G New Radio (NR) or a successor system of the LTE called Next Generation (NG), and the like is being specified.

For example, in the radio access network (RAN) of the NR, Integrated Access and Backhaul (IAB) in which radio access to a terminal (User Equipment, UE) and a radio backhaul between radio communication nodes such as radio base stations (gNB) are integrated is being considered (see Non Patent Literature 1).

In the IAB, an IAB node has a Mobile Termination (MT), which is a function for connecting to a parent node (may also be referred to as an IAB donor), and a Distributed Unit (DU), which is a function for connecting to a child node or UE.

In Non-Patent Literature 1, seven cases are specified with respect to adjustment (alignment) of transmission timing between a parent node and an IAB node. For example,
transmitting/receiving unit of the downlink (DL) transmission timing between the IAB node and the IAB donor (Case #1), transmitting/receiving unit in the IAB node of the DL and uplink (UL) transmission timing (Case #2), transmitting/receiving unit in the IAB node of the DL and uplink (UL) reception timing (Case #3), and the like are specified.

Furthermore, a combination of transmitting/receiving unit of the DL transmission timing of Case #1 and the UL transmission timing of Case #2 (Case #6), a combination of transmitting/receiving unit of the DL transmission timing of Case #1 and the UL reception timing of Case #3 (Case #7), and the like are specified.

In 3GPP, consideration is made to support the simultaneous operation of the link (Link parent) on the DU side and the link (Link child) on the MT side in the IAB node (Non-Patent Literature 2).

Citation List

Non patent Literature

Non Patent Literature 1
3GPP TR 38.874 V16.0.0, 3rd Generation Partnership Project; Technical Specification Group Radio Access Network; NR; Study on Integrated Access and Backhaul; (Release 16), 3GPP, December 2018
Non Patent Literature 2
"New WID on Enhancements to Integrated Access and Backhaul", RP-193251, 3GPP TSG RAN Meeting #86, 3GPP, December 2019

Summary of Invention

Considering the realistic operation in the IAB, timing transmitting/receiving unit according to any of the above Case #1, Case #6, and Case #7 is assumed. However, there is a problem that the parent node, the IAB node and the like cannot recognize which Case should be followed for operation, and cannot determine appropriate transmission timing and reception timing of the DU and the MT.

Therefore, the following disclosure is made in view of such a situation, and aims to provide a radio communication node capable of determining a transmission timing and a reception timing of the appropriate Distributed Unit (DU) and Mobile Termination (MT) in the Integrated Access and Backhaul (IAB).

According to one aspect of the present disclosure, there is provided a radio communication node (radio communication node 100A) including a transmitting/receiving unit (radio transmitting unit 110 and radio receiving unit 120) that transmits and receives a radio signal to and from a lower node (radio communication node 100B), and a control unit (control unit 140) that recognizes whether or not the lower node includes at least one of a plurality of transceivers or a plurality of antenna panels by an implicit or explicit notification from the lower node.

According to one aspect of the present disclosure, there is provided a radio communication node (radio communication node 100B) including a transmitting/receiving unit (radio transmitting unit 161 and radio receiving unit 162) that transmits and receives a radio signal to and from an upper node (radio communication node 100A), and a control unit (control unit 170) that reports to the upper node implicitly or explicitly whether or not the radio communication node corresponds to at least one of a combination of adjustments of a downlink transmission timing and an uplink transmission timing and a combination of adjustments of the downlink transmission timing and the uplink reception timing.

According to one aspect of the present disclosure, there is provided a radio communication node (radio communication node 100A) including transmitting/receiving unit (radio transmitting unit 110 and radio receiving unit 120) that transmits and receives a radio signal to and from a lower node (radio communication node 100B), and a control unit (control unit 140) that reports to the lower node implicitly or explicitly whether or not the radio communication node is transmitting timing information based on either a combination of adjustments of a downlink transmission timing and an uplink transmission timing or a combination of adjustments of the downlink transmission timing and the uplink reception timing.

[Brief Description of Drawings]

Fig. 1 is an overall schematic configuration view of a radio communication system 10.
Fig. 2 is a view illustrating a basic configuration example of the IAB.
Fig. 3 is a functional block configuration view of a radio communication node 100A.
Fig. 4 is a functional block configuration view of a radio communication node 100B.
Fig. 5 is a view illustrating an example of a relationship between Tpropagation_0, TA, and T delta.
Fig. 6 is a view illustrating an example of a combination of timing adjustments between MT/DUs according to operation example 1.
Fig. 7 is a view illustrating an application example of TA, T delta, and T1 for each of Case #1, Case #6, and Case #7 according to operation example 3.
Fig. 8 is a view illustrating an example of a hardware configuration of a CU 50 and radio communication nodes 100A to 100C.

Description of Embodiments

An embodiment will be described below with reference to the drawings. The same functions and configurations are denoted with the same or similar reference numerals, and the description thereof will be appropriately omitted.

(1) Overall schematic configuration of radio communication system

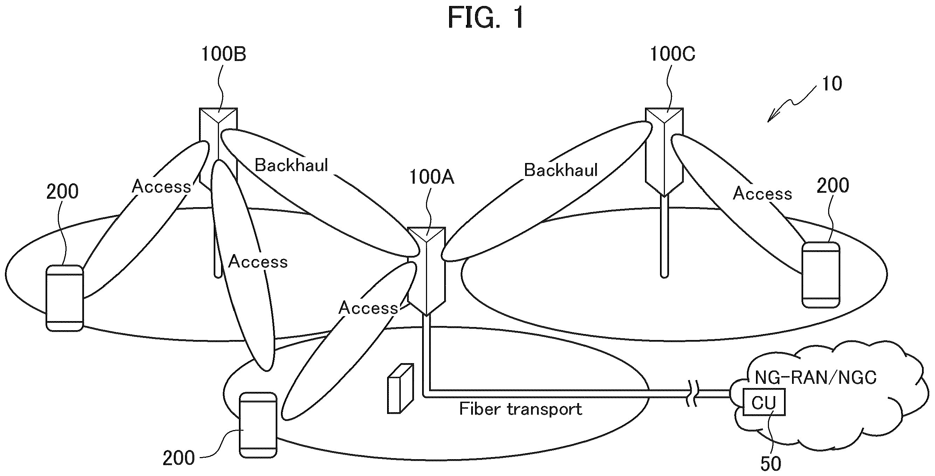

Fig. 1 is an overall schematic configuration view of a radio communication system 10 according to the present embodiment. The radio communication system 10 is a radio communication system compliant with the 5G New Radio (NR), and includes a plurality of radio communication nodes and terminals.

Specifically, the radio communication system 10 includes radio communication nodes 100A, 100B, 100C and a terminal 200 (hereinafter referred to as UE 200, User Equipment).

The radio communication nodes 100A, 100B, 100C can set a radio access with the UE 200 and a radio backhaul (BH) between the radio communication nodes. Specifically, a backhaul (transmission path) by a radio link is set between the radio communication node 100A and the radio communication node 100B, and between the radio communication node 100A and the radio communication node 100C.

The configuration in which the radio access with the UE 200 and the radio backhaul between the radio communication nodes are integrated in such manner is called an Integrated Access and Backhaul (IAB).

The IAB reuses existing functions and interfaces defined for radio access. In particular, Mobile-Termination (MT), gNB-DU (Distributed Unit), gNB-CU (Central Unit), User Plane Function (UPF), Access and Mobility Management Function (AMF) and Session Management Function (SMF), as well as corresponding Interfaces such as NR Uu (MT to gNB/DU), F1, NG, X2 and N4 are used as the baseline.

The radio communication node 100A is connected to an NR radio access network (NG-RAN) and a core network (Next Generation Core (NGC) or 5GC) via a wired transmission path such as a fiber transport. The NG-RAN/NGC includes a Central Unit 50 (hereinafter referred to as CU50) that is a communication node. It should be noted that the NG-RAN and the NGC may be simply expressed as "network".

Note that the CU 50 may be configured by any of the above UPF, AMF, SMF or a combination thereof. Alternatively, the CU 50 may be a gNB-CU as described above.

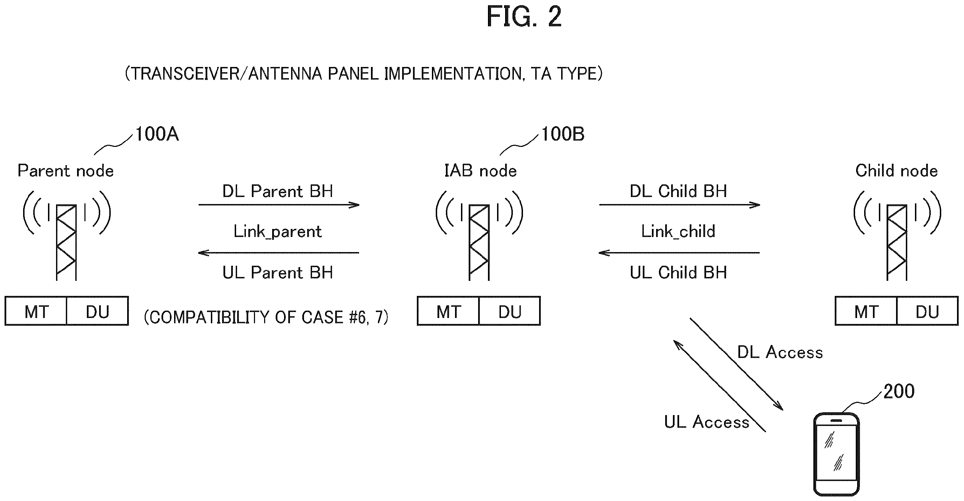

Fig. 2 is a view illustrating a basic configuration example of the IAB. As illustrated in Fig. 2, in the present embodiment, the radio communication node 100A forms a parent node (Parent node) in the IAB, and the radio communication node 100B (and the radio communication node 100C) forms an IAB node in the IAB. Note that the parent node may be referred to as an IAB donor.

A child node (Child node) in the IAB is configured by another radio communication node not illustrated in Fig. 1. Alternatively, the UE 200 may configure a child node.

A radio link is set up between the parent node and the IAB node. Specifically, a radio link referred to as Link parent is set.

A radio link is set up between the IAB node and the child node. Specifically, a radio link referred to as Link_child is set.

A radio link established between such radio communication nodes is referred to as a radio backhaul link. Link_parent is formed by a DL Parent BH in the downlink (DL) direction and a UL Parent BH in the uplink (UL) direction. Link_child is formed by a DL Child BH in the DL direction and a UL Child BH in the UL direction.

That is, in the IAB, the direction from the parent node to the child nodes (including UE 200) is the DL direction, and the direction from the child node to the parent node is the UL direction.

The radio link set between the UE 200 and the IAB node or the parent node is referred to as a radio access link. Specifically, the radio link is configured by a DL Access in the DL direction and a UL Access in the UL direction.

The IAB node has a Mobile Termination (MT), which is a function for connecting to a parent node (may also be called an upper node), and a Distributed Unit (DU), which is a function for connecting to a child node (or UE 200). The child node may be referred to as a lower node.

Similarly, the parent node has an MT for connecting with an upper node and a DU for connecting with a lower node such as an IAB node. The parent node may have a CU (Central Unit) instead of the MT.

Furthermore, similarly to the IAB node and the parent node, the child node also has an MT for connecting with an upper node such as the IAB node and a DU for connecting with a lower node such as the UE 200.

Radio resources used by the DU are, in terms of DU, DL, UL, and Flexible time-resource (D/U/F), and the radio resources are classified into one of the types, Hard, Soft or Not Available (H/S/NA). Furthermore, available (available) or unavailable (not available) is also defined in the software (S).

Note that the IAB configuration example illustrated in Fig. 2 uses CU/DU division, but the IAB configuration is not necessarily limited to such a configuration. For example, in the radio backhaul, the IAB may be configured by tunneling using GPRS Tunneling Protocol (GTP)-U/User Datagram Protocol (UDP)/Internet Protocol (IP).

The main advantage of such an IAB is that NR cells can be arranged flexibly and at high density without densifying the transport network. The IAB can be applied to various scenarios such as arrangement of small cells outdoors, indoors, and even support for mobile relays (e.g., in buses and trains).

As illustrated in Figs. 1 and 2, the IAB may also support NR-only standalone (SA) development, or non-standalone (NSA) development including other RATs (such as LTE).

In the present embodiment, the radio access and the radio backhaul may operate on the premise of half-duplex communication (Half-duplex). However, it is not necessarily limited to half-duplex communication, and full-duplex communication (Full-duplex) may be used as long as the requirements are satisfied.

Furthermore, as the multiplexing scheme, time division multiplexing (TDM), space division multiplexing (SDM) and frequency division multiplexing (FDM) can be used.

When the IAB node operates in half-duplex communication (Half-duplex), the DL Parent BH is the receiving (RX) side and the UL Parent BH is the transmitting (TX) side, and the DL Child BH is the transmitting (TX) side and the UL Child BH is the receiving (RX) side. Moreover, in a case where Time Division Duplex (TDD) is adopted, the setting pattern of the DL/UL in the IAB node is not limited to only DL-F-UL, and the setting pattern such as UL-F-DL may be applied only for the radio backhaul (BH).

Furthermore, in the present embodiment, the simultaneous operation of the DU and the MT of the IAB node is realized by using the SDM/FDM.

(2) Functional block configuration of radio communication system

Next, the functional block configurations of the radio communication node 100A and the radio communication node 100B that form the radio communication system 10 will be described.

(2.1) Radio communication node 100A

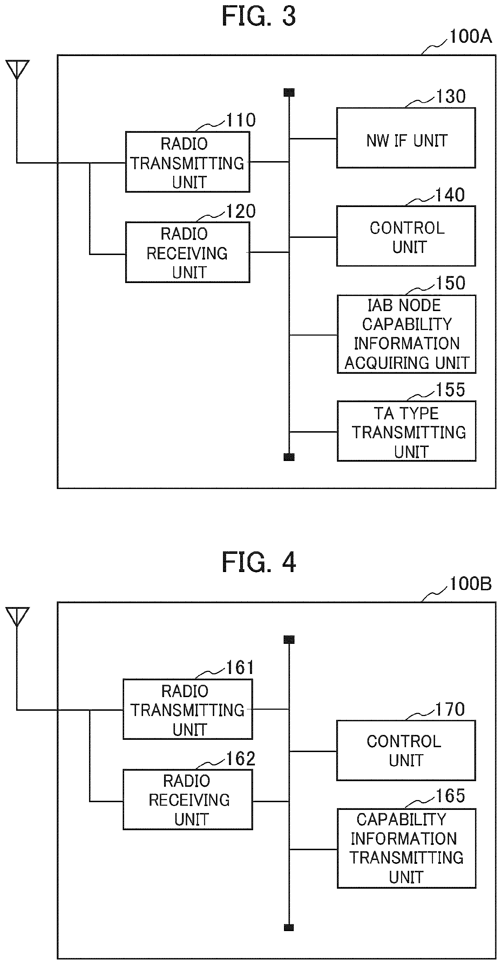

Fig. 3 is a functional block configuration view of the radio communication node 100A that form a parent node. As illustrated in Fig. 3, the radio communication node 100A includes a radio transmitting unit 110, a radio receiving unit 120, a NW IF unit 130, a control unit 140, an IAB node capability information acquiring unit 150, and a TA type transmitting unit 155.

The radio transmitting unit 110 transmits a radio signal compliant with the 5G specifications. In addition, the radio receiving unit 120 transmits a radio signal compliant with the 5G specifications. In the present embodiment, the radio transmitting unit 110 and the radio receiving unit 120 perform radio communication with the radio communication node 100B that forms an IAB node (which may be referred to as a lower node).

In the present embodiment, the radio communication node 100A has the functions of the MT and the DU, and the radio transmitting unit 110 and the radio receiving unit 120 also transmit and receive radio signals in correspondence with the MT/DU. In the present embodiment, the radio transmitting unit 110 and the radio receiving unit 120 form a transmitting/receiving unit that transmits/receives a radio signal to/from a lower node.

The NW IF unit 130 provides a communication interface that realizes a connection with the NGC side or the like. For example, the NW IF unit 130 may include interfaces such as X2, Xn, N2, N3.

The control unit 140 executes control of each functional block forming the radio communication node 100A. Particularly, in the present embodiment, the control unit 140 controls the DL and UL transmission timings and the UL reception timing. Specifically, the control unit 140 can adjust the DL transmission timing and the UL transmission timing in the lower node, for example, the radio communication node 100B (IAB node). Furthermore, the control unit 140 can adjust the UL reception timing in the radio communication node 100B (IAB node).

The control unit 140 may adjust the DL transmission timing of each radio communication node including the radio communication node 100A to correspond to Case #1 defined in 3GPP TR 38.874, as will be described later.

Furthermore, the adjustment of DL and UL transmission timings in the IAB node may correspond to Case #2. Furthermore, the adjustment of DL and UL reception timings in the IAB node may correspond to Case #3.

The adjustment in the IAB node may include adjustment of the DL transmission timing in the IAB node, and the DL and UL transmission timings may be adjusted in the IAB node.

That is, the control unit 140 can support Case #6, which is a combination of adjustment of the transmission timing of the DL of Case #1 and the UL of Case #2.

Furthermore, the adjustment in the IAB node may include adjustment of the DL transmission timing in the IAB node, and the DL and UL reception timings may be adjusted in the IAB node.

That is, the control unit 140 can support Case #7, which is a combination of adjustment of the DL transmission timing of Case #1 (hereinafter appropriately omitted as Tx) and adjustment of the UL reception timing of Case #3 (hereinafter appropriately omitted as Rx).

Moreover, the control unit 140 may recognize whether or not the lower node, specifically, the IAB node includes at least one of a plurality of transceivers and a plurality of antenna panels by implicit or explicit notification from the IAB node.

A transceiver may be interpreted as a unit that transmits or receives radio signals, and a plurality of transceivers may be interpreted as a plurality of units that can simultaneously transmit or receive radio signals of the same or different frequency bands. Furthermore, an antenna panel may be interpreted as a panel configured by a plurality of antenna elements capable of forming a beam, and a plurality of antenna panels may be interpreted as a plurality of panels that can simultaneously transmit or receive different radio signals (or beams).

An implicit notification may be interpreted as, for example, a case where notification is made from the IAB node as being no-TDM for the MT-Tx/DU-Rx and/or MT-Rx/DU-Tx, in addition to a notification of not being TDM (no-TDM, that is, corresponds to SDM/FDM) for the MT-Tx/DU-Tx and/or MT-Rx/DU-Rx. In this case, the control unit 140 may decide that the IAB node is implemented with a plurality of transceivers and/or a plurality of antenna panels.

On the other hand, an explicit notification may be, for example, notifying whether the IAB node is implemented with a plurality of transceivers and/or antenna panels as IAB node capability information (capability) from the IAB node to the parent node.

Specifically, the control unit 140 can cause the IAB node capability information acquiring unit 150 to acquire the capability information indicating whether or not the IAB node includes at least one of a plurality of transceivers or a plurality of antenna panels from the IAB node.

Furthermore, the control unit 140 can acquire the propagation delay between the radio communication node 100A (parent node) and the radio communication node 100B (lower node).

Specifically, the control unit 140 computes the propagation delay of the path (0) between the parent node and the lower node based on (Equation 1).

$$\mathrm{Tpropagation\_0 = (TA/2 + T\_delta) \ldots \quad (Equation\ 1)}$$

TA is a value of Timing Advance (TA) for determining the transmission timing of the UE defined in 3GPP Release 15. Here, TA may be referred to as timing information.

Furthermore, T_delta is determined in consideration of the switching time from reception to transmission of the parent node. The method of calculating Tpropagation_0 will be described later.

For example, in Case #1, it is defined in 3GPP Release 16 that the IAB node uses the calculation formula (TA/2+T_delta) to compute the propagation delay (Tpropagation_0) of the path (0) with the parent node and offsets and transmits the transmission timing to match the DL transmission timing in the DU of each node.

Here, TA is the value of Timing Advance for determining the transmission timing of the UE defined in 3GPP Release 15, and T_delta is determined in view of the switching time (may also be referred to as a gap) from the reception to the transmission of the parent node, and the like.

The control unit 140 may notify the IAB node implicitly or explicitly whether the parent node (radio communication node 100A) is transmitting the timing information (TA) based on Case #6 or Case #7. As described above, Case #6 is a combination of adjustments of the DL transmission timing (Tx) and the UL transmission timing (Tx). Also, Case #7 is a combination of adjustments of the DL transmission timing (Tx) and the UL reception timing (Rx).

The implicit notification may be interpreted as, for example, deciding which Case-based TA is being transmitted based on the content (e.g., T_delta) of the timing information (TA).

On the other hand, the explicit notification may be interpreted as notifying the IAB node of information that directly indicates which Case-based TA it is. Specifically, the control unit 140 can cause the information indicating which Case-based TA is being transmitted through the TA type transmitting unit 155. Note that examples of the implicit and explicit notifications will be described later.

The timing information (TA) can be transmitted using the TA command in the Random Access Response (RAR) or the Medium Access Control-Control Element (MAC-CE). Similarly, information indicating to adjust the DL transmission timing and the UL transmission timing or reception timing in the IAB node may also be transmitted using the MAC-CE, but may be transmitted using an appropriate channel or upper layer (radio resource control layer (RRC) etc.) signaling.

Furthermore, the timing information may also be transmitted using an appropriate channel or upper layer signaling.

The channel includes a control channel and a data channel. The control channel includes PDCCH (Physical Downlink Control Channel), PUCCH (Physical Uplink Control Channel), PRACH (Physical Random Access Channel), PBCH (Physical Broadcast Channel), and the like.

Furthermore, the data channel includes PDSCH (Physical Downlink Shared Channel), PUSCH (Physical Uplink Shared Channel), and the like.

Note that the reference signal includes Demodulation reference signal (DMRS), Sounding Reference Signal (SRS), Phase Tracking Reference Signal (PTRS), and Channel State Information-Reference Signal (CSI-RS), and the signal includes the channel and the reference signal. Furthermore, the data may mean data transmitted via the data channel.

The UCI is control information that is symmetrical with Downlink Control Information (DCI), and is transmitted via the PUCCH or the PUSCH. The UCI may include SR (Scheduling Request), HARQ (Hybrid Automatic repeat request) ACK/NACK, CQI (Channel Quality Indicator), and the like.

The IAB node capability information acquiring unit 150 can acquire capability information transmitted from the IAB node. Specifically, the IAB node capability information acquiring unit 150 can acquire capability information indicating whether or not the IAB node includes at least one of a plurality of transceivers or a plurality of antenna panels.

Whether or not the IAB node includes at least one of a plurality of transceivers or a plurality of antenna panels may be included in the capability information indicating various capabilities of the IAB node, or may be configured as single capability information.

The TA type transmitting unit 155 can transmit information (may also be referred to as TA type) indicating which Case-based TA is being transmitted by the parent node (radio communication node 100A) to the IAB node. Specifically, the TA type transmitting unit 155 can notify the IAB node of the type of timing information (TA) based on either Case #6 or Case #7 of the parent node (radio communication node 100A) based on the control of the control unit 140.

(2.2) Radio communication node 100B

Fig. 4 is a functional block configuration view of the radio communication node 100B that form an IAB node. As illustrated in Fig. 4, the radio communication node 100B includes a radio transmitting unit 161, a radio receiving unit 162, a capability information transmitting unit 165, and a control unit 170.

The radio transmitting unit 161 transmits a radio signal according to the 5G specifications. In addition, the radio receiving unit 162 transmits a radio signal according to the 5G specifications. In the present embodiment, the radio transmitting unit 161 and the radio receiving unit 162 execute radio communication with the radio communication node 100A that forms the parent node and the radio communication with the child node (including the case of the UE 200).

Furthermore, the radio transmitting unit 161 and the radio receiving unit 162 receive the UL from the lower node and transmit the DL to the lower node based on the method of adjusting the DL transmission timing and the UL reception timing decided by the control unit 170. In the present embodiment, the radio transmitting unit 161 and the radio receiving unit 162 configure a transmitting/receiving unit that transmits/receives a radio signal to/from an upper node.

The capability information transmitting unit 165 transmits capability information indicating the capability of the IAB node (radio communication node 100B) to the upper node.

Specifically, the capability information transmitting unit 165 can transmit capability information indicating whether or not the IAB node includes at least one of a plurality of transceivers or a plurality of antenna panels.

Furthermore, the capability information transmitting unit 165 can transmit capability information indicating a Case that can be corresponded by the IAB node (radio communication node 100B) to the upper node, specifically, the parent node. Specifically, the capability information transmitting unit 165 can transmit to the parent node capability information indicating a Case number that can be corresponded by the IAB node among the Case numbers indicating the type of DL or UL timing adjustment between the radio communication nodes forming the IAB.

In the present embodiment, the radio communication node 100B can correspond to at least Case #6 and Case #7, and the capability information transmitting unit 165 may report to the parent node that it corresponds to Case #6 and/or Case #7.

The control unit 170 executes control of each functional block forming the radio communication node 100B. Particularly, in the present embodiment, the control unit 170 can adjust the DL transmission timing and the UL transmission timing and reception timing in the radio communication node 100B.

Specifically, the control unit 170 can adjust (may be read as the case corresponding to Case #6) the DL transmission timing and the UL transmission timing in the radio communication node 100B (lower node).

Furthermore, the control unit 170 can adjust (may be read as the case corresponding to Case #7) the DL transmission timing and the UL reception timing in the radio communication node 100B.

The control unit 170 may report to the upper node (radio communication node 100A) implicitly or explicitly whether or not the IAB node (radio communication node 100B) corresponds to at least one of the combination of the DL transmission timing and the UL transmission timing (i.e., Case #6), and the combination of the DL transmission timing and the UL reception timing (i.e., Case #7).

The explicit report may be interpreted as a report by the capability information transmitted by the capability information transmitting unit 165 described above. On the other hand, the implicit report may be realized by, for example, the following method.

- In addition to the reporting of no-TDM (i.e., corresponds to SDM/FDM) for the MT-Tx/DU-Tx, the parent node also decides that the IAB node corresponds to Case #6 when reported from the IAB node that it is TDM for the MT-Tx/DU-Rx and/or the MT-Rx/DU-Tx.
- In addition to the reporting of no-TDM for the MT-Tx/DU-Rx, the parent node decides that the IAB node corresponds to Case #7 when reported from the IAB node that it is TDM for the MT-Tx/DU-Rx and/or the MT-Rx/DU-Tx.

(3) Operation of radio communication system

Next, the operation of the radio communication system 10 will be described. Specifically, an operation regarding adjustment of the transmission timing and the reception timing of the DL and the UL in the radio communication system 10 will be described.

More specifically, adjustment of the transmission timing of the DL and the UL in the IAB where the SDM and/or the FDM is used as a multiplexing method, especially, the adjustment operation of the transmission timing of the DL and the UL in a case where Case #6 defined in 3GPP TR 38.874 is applied will be described.

(3.1) Defined contents of 3GPP

First, the defined contents of the 3GPP will be briefly described. In 3GPP TR 38.874 (e.g., V16.0.0), the following seven cases are defined in order to match the transmission timing of the DL or the UL between the radio communication nodes forming the IAB.

(Case #1): DL transmission timing adjustment between the IAB node and the IAB donor
(Case #2): DL and UL transmission timing adjustment in the IAB node
(Case #3): DL and UL reception timing adjustment in the IAB node
(Case #4): Transmission by Case #2 and reception by Case #3 in the IAB node
(Case #5): Application of Case #1 to the access link timing in the IAB node and application of Case #4 to the backhaul link timing in different time slots
(Case #6): DL transmission timing adjustment of Case #1 + UL transmission timing adjustment of Case #2
(Case #7): DL transmission timing adjustment of Case #1 + UL reception timing adjustment of Case #3

In 3GPP Release 16, as described above, it is agreed that the IAB node uses the calculation formula (TA/2+T_delta) to compute the propagation delay (Tpropagation_0) of the path (0) with the parent node and offsets and transmits the transmission timing to match the DL transmission timing in the DU between the radio communication nodes forming the IAB.

Here, TA is the value of Timing Advance for determining the transmission timing of the UE defined in 3GPP Release 15, and T_delta is determined in view of the switching time from the reception to the transmission of the parent node, and the like.

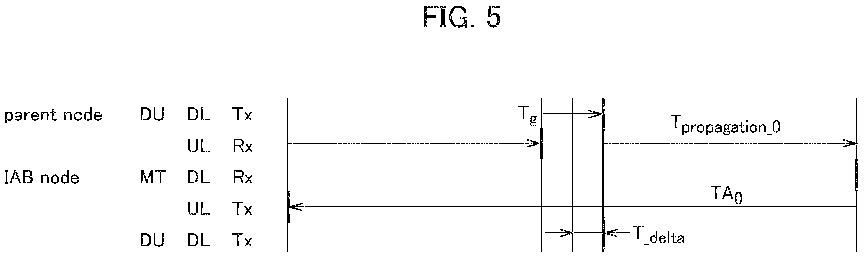

Fig. 5 is a view illustrating an example of a relationship between Tpropagation_0, TA, and T_delta. As illustrated in Fig. 5, Tpropagation_0 is obtained by adding T_delta to a value obtained by dividing the TA0 between the parent node and the IAB node by two. T_delta may correspond to a value obtained by dividing the gap (Tg) accompanying the switching time from UL reception to DL transmission in the parent node by two.

In the following, an operation regarding the transmission timing of the DL and the UL when the radio communication node configuring the IAB supports Case #6 and Case #7 in addition to Case #1 will be described.

The following contents may be assumed as a premise of the operation example described later.

- Due to the limitation of half-duplex communication, any one of TDM/SDM/FDM is applied to the backhaul link and the access link of the IAB node. In a case where SDM or FDM is applied, the DU and the MT can be transmitted or received at the same time.
- When supporting the SDM/FDM using a single panel, it is necessary to support Case #6 for simultaneous transmission in the IAB node or Case #7 for simultaneous reception in the IAB node.
- Case #1 is supported in both transmission timings of the backhaul link and the access link.
- Case #7 is supported only when compatible with the UE of Release 15.
- The IAB node needs to set the DL transmission timing before the DL reception timing by TA/2 + T_delta.
- T_delta is notified from the parent node. The value of T_delta considers factors such as the switching time from transmission to reception (or vice versa), the offset between the DL transmission and the UL reception of the parent node due to factors such as hardware failure, and the like.
- TA is derived based on the regulations of Release 15. The TA is interpreted as a timing gap between the UL transmission timing and the DL reception timing.
- Since the DL transmission timing of the IAB node is adjusted by setting the DL transmission timing (TA/2+T_delta) of the IAB node before the DL reception timing, T_delta needs to be set to (-1/2) of the time interval between the start of the UL reception frame i of the IAB node in the parent node and the start of the DL transmission frame i.

(3.2) Operation example

In the operation example described below, the Over-the-Air (OTA) synchronization of the Case #6 (combination of Case #1 and Case #2) and the Case #7 (combination of Case #1 and Case #3) is realized between the radio communication nodes forming the IAB.

(3.2.1) Operation overview

- (Operation example 1): The parent node implicitly or explicitly recognizes whether the IAB node is implemented with a plurality of transceivers/antenna panels.
- (Example of implicit case): In addition to the notification of no-TDM (that is, corresponding to SDM/FDM) for the MT-Tx/DU-Tx and/or MT-Rx/DU-Rx, when notified from the IAB node that it is no-TDM for MT-Tx/DU-Rx and/or For MT-Rx/DU-Tx, the parent node decides that the IAB node is implemented with a plurality of transceivers/antenna panels.
- (Example of explicit case): The IAB node notifies the parent node of the implementation state of the transceiver/antenna panel and the like as capability information (capability).
- (Operation example 2): The IAB node implicitly or explicitly reports whether or not Case #6 and Case #7 are compatible.
- In addition to the reporting of no-TDM for the MT-Tx/DU-Tx, when reported from the IAB node that it is TDM for the MT-Tx/DU-Rx and/or the MT-Rx/DU-Tx, the parent node decides that the IAB node corresponds to Case #6 OTA timing alignment.

Furthermore, in addition to the reporting of no-TDM for the MT-Rx/DU-Rx, when reported from the IAB node that it is TDM for the MT-Tx/DU-Rx and/or the MT-Rx/DU-Tx, the parent node decides that the IAB node corresponds to Case #7 OTA timing alignment.

- (Example of explicit case): The IAB node reports to the parent node of the compatibility of each of Case #6 and Case #7 as capability information (capability).
- (Operation example 3): The parent node implicitly or explicitly notifies which Case (Case #6 or Case #7)-based TA is being transmitted.
- (Example of implicit case): The IAB node decides that Case #1-based TA is being transmitted when "T_delta" is notified, Case #7-based TA is being transmitted when "T1" (details are described later) is notified, and Caes#6-based TA is being transmitted when neither T_delta nor T1 is notified.
- (Example of explicit case): The parent node notifies the IAB node which Case-based TA it is along with the TA.

(3.2.2) Operation example 1

In the present operation example, the IAB node may notify the availability of the no-TDM between the MT/DU for each combination (Case #1, Case #6, Case #7) of the timing adjustment based on 3GPP Release-16.

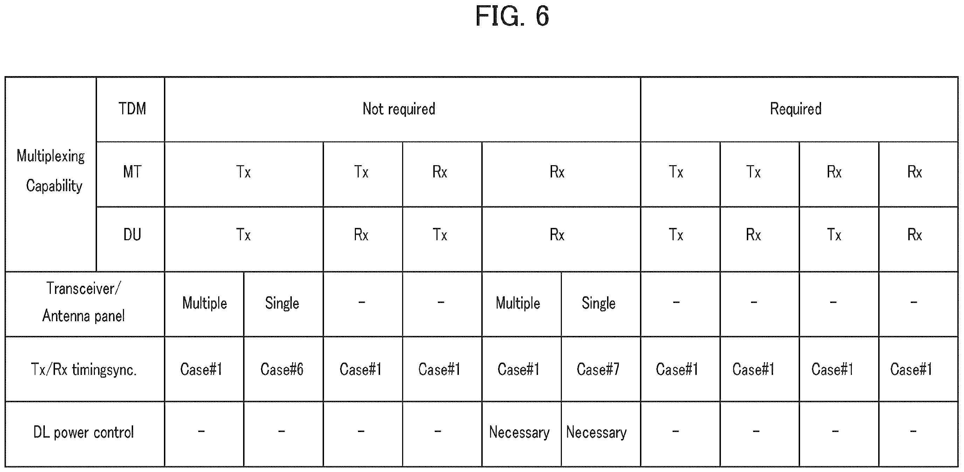

Fig. 6 illustrates a combination example of the timing adjustment between MT/DU according to operation example 1. As illustrated in Fig. 6, the combination may include TDM necessity, Tx/Rx type of MT/DU, implementation (plural or single) of the transceiver/antenna panel, Case type, and DL transmission power control necessity.

Here, the combination includes, for example, MT-Tx/DU-Tx, MT-Tx/DU-Rx, MT-Rx/DU-Tx, or MT-Rx/DU-Rx.

For example, when MT-Tx/DU-Tx is notified as no-TDM, the IAB node may intend that simultaneous transmission of the MT and the DU is possible.

Here, if the MT/DU does not have its own transceiver/antenna panel (i.e., if the MT and the DU share the same transceiver/antenna panel), simultaneous transmission is required, and thus timing adjustment of Case #6 becomes necessary.

Therefore, the parent node may implicitly or explicitly recognize whether the IAB node is implemented with a plurality of transceivers/antenna panels.

In the explicit case, the IAB node may notify the parent node of any of the following.

- A plurality of transceivers or antenna panels are implemented.
- Necessity of timing adjustment according to Case #6 or Case #7.

(3.2.3) Operation example 2

In this operation example, the parent node may differ the TA derivation method and the presence/absence of the T_delta transmission depending on whether the IAB node corresponds to the timing adjustment of Case #6 or Case #7.

Therefore, as described above, the IAB node may implicitly or explicitly report the compatibility of each of Case #6 and Case #7.

In the explicit case, the IAB node may report to the parent node any of the following.

- Compatibility of each of Case #6 and Case #7 in the IAB node (whether or not all frequency combinations correspond to Case #6 and Case #7).
- Compatibility of each of Case #6 and Case #7 for each Frequency Range (FR1, FR2).
- Compatibility of each of Case #6 and Case #7 for each frequency band.
- Compatibility of each of Case #6 and Case #7 for each frequency combination.

Note that in 3GPP Release 15 and Release 16 (NR), operations of a plurality of frequency ranges, specifically, the band including FR1 (410 MHz to 7.125 GHz) and FR2 (24.25 GHz to 52.6 GHz) are being specified.

(3.2.4) Operation example 3

In this operation example, the IAB node has different MT transmission timing depending on which of Case #1, Case #6, and Case #7 timing adjustment it follows for operation. Therefore, the TA value may also be different according to the MT transmission timing.

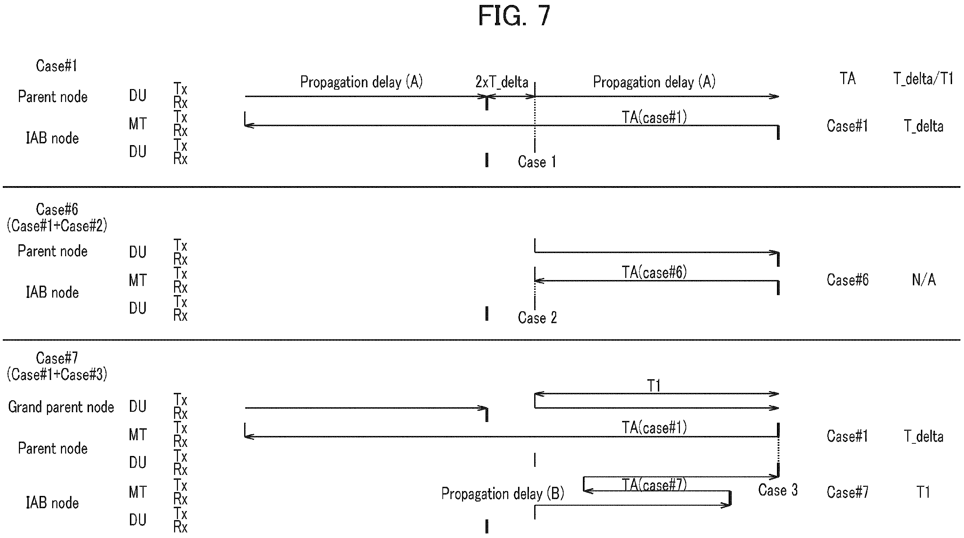

Fig. 7 illustrates an application example of TA, T_delta, and T1 for each of Case #1, Case #6, and Case #7 according to operation example 3.

In this operation example, the transmission timing of the MT (IAB node) may be determined based on the value of TA in any Case.

On the other hand, with regards to the transmission timing of the DU, the parameters used may differ depending on each case. Specifically, it may differ as follows.

- Case #1:TA(case #1)/2 + T_delta
- Case #6:TA(case #2)
- Case #7:TA(case #3)/2 + T1/2

Here, T1 may be interpreted as a gap between the DU transmission timing and the DU reception timing in the IAB node, as illustrated in Fig. 7.

As described above, the parent node may implicitly or explicitly notify the IAB node which Case-based TA is being transmitted.

In the explicit case, the parent node may notify the IAB node of which Case-based TA it is along with the TA or the T_delta/T1. The notification may be realized by, for example, MAC-CE or upper layer (RRC, etc.) signaling.

Furthermore, until the IAB node can decide to which Case it corresponds to (may be until the capability information is received), Case #1-based TA may be assumed and operated.

Moreover, the parent node may notify the IAB node of whether the parent node itself is compatible with Case #6 and Case #7 by broadcasting information such as system information (SIB) or signaling such as RRC.

(4) Operation/effect

According to the embodiment described above, the following operations and effects are obtained. Specifically, the parent node (radio communication node 100A) can recognize whether or not the lower node, specifically, the IAB node (radio communication node 100B) has at least one of a plurality of transceivers or a plurality of antenna panels by an implicit or explicit notification from the IAB node.

When the IAB node does not have a plurality of transceivers or a plurality of antenna panels (not implemented), it can be decided that timing adjustment according to Case #6 is necessary. Therefore, even if timing adjustment according to any of Case #1, Case #6, and Case #7 is assumed, the parent node, the IAB node and the like may determine the appropriate transmission timing and reception timing of the DU and the MT.

In the present embodiment, the radio communication node 100A can acquire from the IAB node the capability information indicating whether or not the IAB node includes at least one of a plurality of transceivers and/or a plurality of antenna panels. Therefore, the parent node, the IAB node, and the like can more reliably determine the appropriate transmission timing and reception timing of the DU and the MT.

The IAB node can report to the upper node (radio communication node 100A) implicitly or explicitly whether or not the IAB node corresponds to at least one of the combination of the DL transmission timing and the UL transmission timing (i.e., Case #6), and the combination of the DL transmission timing and the UL reception timing (i.e., Case #7).

Therefore, even if timing adjustment according to any of Case #1, Case #6, and Case #7 is assumed, the parent node, the IAB node and the like may determine the appropriate transmission timing and reception timing of the DU and the MT.

Furthermore, the parent node (radio communication node 100A) can notify the IAB node implicitly or explicitly whether the parent node is transmitting the Case #6-based or Case #7-based timing information (TA). Therefore, the IAB node can set an appropriate Case based on the TA and can determine appropriate transmission timing and reception timing of the DU and the MT.

(5) Other embodiments

Although the embodiment has been described above, it is obvious to those skilled in the art that the present invention is not limited to the description of the embodiment and various modifications and improvements can be made.

For example, in the embodiment described above, names such as parent node, IAB node, and child node were used, but the names may be differed only when the configuration of the radio communication node in which the radio backhaul between radio communication nodes such as gNB and the radio access with the terminal are integrated is adopted. For example, it may be simply referred to as a first node, a second node, and the like., or may be referred to as an upper node, a lower node or a relay node, an intermediate node, and the like.

Furthermore, the radio communication node may be simply referred to as a communication device or a communication node, or may be read as a radio base station.

In the embodiment described above, the terms downlink (DL) and uplink (UL) are used, but they may be called in other terms. For example, the terms may be replaced or associated with terms such as forward ring, reverse link, access link, and backhaul. Alternatively, terms such as a first link, a second link, a first direction, ae second direction, etc. may be simply used.

Moreover, the block configuration views (Figs. 3 and 4) used to describe the above embodiment illustrate blocks of functional units. Those functional blocks (structural components) can be realized by an arbitrary combination of at least one of hardware and software. The method for realizing each functional block is not particularly limited. That is, each functional block may be realized by one device combined physically or logically, or two or more devices separated physically or logically may be directly or indirectly connected (e.g., wired, or wireless) to each other and such plural devices may be used to realize each functional block. The functional blocks may be realized by combining software with the one device or the plural devices mentioned above.

Functions include judging, determining, deciding, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like, but are not limited thereto. For example, a functional block (structural component) that causes transmission may be referred to as a transmitting unit or a transmitter. For any of the above, as explained above, the method for realizing is not particularly limited to any one method.

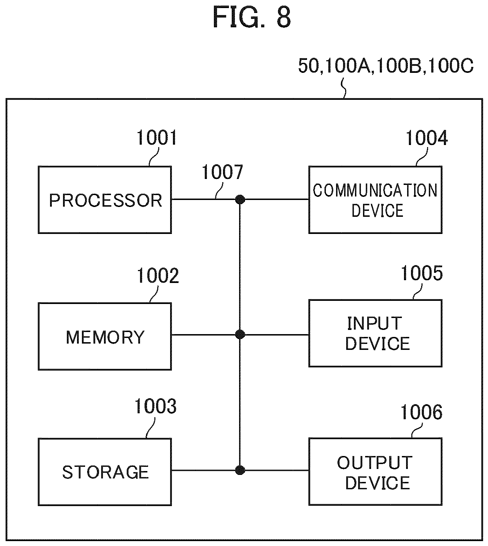

Furthermore, the CU 50 and the radio communication nodes 100A to 100C (devices) described above may function as a computer that performs the process of the radio communication method of the present disclosure. Fig. 8 is a view illustrating an example of a hardware configuration of the device. As illustrated in Fig. 8, the device may be configured as a computer device including a processor 1001, a memory 1002, a storage 1003, a communication device 1004, an input device 1005, an output device 1006, a bus 1007, and the like.

Furthermore, in the following explanation, the term "device" can be read as a circuit, device, unit, and the like. The hardware configuration of the device may be configured by including one or a plurality of the devices illustrated in the figure, or may be configured by without including some of the devices.

Each functional block (see Figs. 3 and 4) of the device can be realized by any of the hardware elements of the computer device or a combination of the hardware elements.

Moreover, the processor 1001 performs computing by loading a predetermined software (computer) on hardware such as the processor 1001 and the memory 1002, and various functions of the device are realized by controlling communication via the communication device 1004 and controlling at least one of read or write of data on the memory 1002 and the storage 1003.

The processor 1001, for example, operates an operating system to control the entire computer. The processor 1001 may be configured with a central processing unit (CPU) including an interface with a peripheral device, a control device, a computing device, a register, and the like.

Moreover, the processor 1001 reads a program (program code), a software module, data, and the like from at least one of the storage 1003 and the communication device 1004 into the memory 1002, and executes various processes according to the data. As the program, a program that causes a computer to execute at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be referred to as register, cache, main memory (main storage device), and the like. The memory 1002 can save therein a program (program codes), software modules, and the like that can execute the method according to one embodiment of the present disclosure.

The storage 1003 is a computer readable recording medium and is configured, for example, with at least one of an optical disk such as Compact Disc ROM (CD-ROM), a hard disk drive, a flexible disk, a magneto-optical disk (e.g., a compact disk, a digital versatile disk, Blu-ray (Registered Trademark) disk), a smart card, a flash memory (e.g., a card, a stick, a key drive), a floppy (Registered Trademark) disk, a magnetic strip, and the like. The storage 1003 can be referred to as an auxiliary storage device. The recording medium described above can be, for example, a database including at least one of the memory 1002 and the storage 1003, a server, or other appropriate medium.

The communication device 1004 is hardware (transmitting/receiving device) for performing communication between computers through at least one of a wired network or a wireless network, and is also referred to as, for example, a network device, a network controller, a network card, a communication module, and the like.

The communication device 1004 may be configured to include a high-frequency switch, a duplexer, a filter, a frequency synthesizer, and the like in order to realize, for example, at least one of Frequency Division Duplex (FDD) and Time Division Duplex (TDD).

The input device 1005 is an input device (e.g., a keyboard, a mouse, a microphone, a switch, a button, a sensor, and the like) that accepts input from the outside. The output device 1006 is an output device (e.g., a display, a speaker, an LED lamp, and the like) that outputs data to the outside. Note that, the input device 1005 and the output device 1006 may be integrated (e.g., a touch screen).

In addition, the respective devices, such as the processor 1001 and the memory 1002, are connected to each other with the bus 1007 for communicating information. The bus 1007 may be formed using a single bus or may be formed using different buses between the devices.

Furthermore, the device may be configured to include hardware such as a microprocessor, a digital signal processor (Digital Signal Processor: DSP), Application Specific Integrated Circuit (ASIC), Programmable Logic Device (PLD), and Field Programmable Gate Array (FPGA), and some or all of these functional blocks may be realized by the hardware. For example, the processor 1001 may be implemented using at least one of these hardware.

Notification of information is not limited to the aspect/embodiment described in the present disclosure, and may be performed using a different method. For example, the notification of information may be performed by physical layer signaling (e.g., Downlink Control Information (DCI), Uplink Control Information (UCI), upper layer signaling (e.g., RRC signaling, Medium Access Control (MAC) signaling, broadcasting information (Master Information Block (MIB), System Information Block (SIB)), other signals, or a combination thereof. The RRC signaling may be referred to as RRC message, for example, and may be RRC Connection Setup message, RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system expanded based on the above. Furthermore, a plurality of systems may be combined (e.g., a combination of at least one of the LTE and the LTE-A and the 5G).

As long as there is no inconsistency in the processing procedure, sequence, flowchart, and the like of each aspect/embodiment described in the present disclosure, the order may be interchanged. For example, elements of various steps have been mentioned using an exemplary order in the method described in the present disclosure, but they are not limited to the specific order mentioned above.

The specific operation assumed to be performed by the base station in the present disclosure may be performed by its upper node in some cases. In a network including one or more network nodes having a base station, it is apparent that the various operations performed for communication with the terminal may be performed by at least one of the base station and another network node other than the base station (e.g., MME, S-GW, etc. may be considered, but not limited thereto). A case where there is one network node other than the base station has been described above, but a combination of a plurality of other network nodes (e.g., MME and S-GW) may be adopted.

Information and signals (information etc.) can be output from the upper layer (or lower layer) to the lower layer (or upper layer). The information and the like may be input and output via a plurality of network nodes.

The input/output information can be saved in a specific location (e.g., a memory) or can be managed using a management table. The information to be input/output can be overwritten, updated, or added. The output information can be deleted. The input information can be transmitted to another device.

The decision may be made by a value (0 or 1) represented by one bit or by a truth value (Boolean: true or false), or may be made by comparison of numerical values (e.g., comparison with a predetermined value).

Each aspect/embodiment described in the present disclosure may be used alone or in combination, or may be switched in accordance with the execution. Furthermore, notification of predetermined information (e.g., notification of "being X") is not limited to being performed explicitly, and may be performed implicitly (e.g., without notifying the predetermined information).

Regardless of whether being referred to as software, firmware, middleware, microcode, hardware description language, or some other names, software should be interpreted broadly to mean instruction, instruction set, code, code segment, program code, program, subprogram, software module, application, software application, software package, routine, subroutine, object, executable file, execution thread, procedure, function, and the like.

Furthermore, software, instruction, information, and the like may be transmitted and received via a transmission medium. For example, when software is transmitted from a website, a server, or some other remote source using at least one of a wired technology (coaxial cable, optical fiber cable, twisted pair, Digital Subscriber Line (DSL), or the like) and a wireless technology (infrared light, microwave, or the like), at least one of these wired and wireless technologies is included within the definition of the transmission medium.

Information, signals, or the like described in the present disclosure may be represented using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or an arbitrary combination thereof.

It should be noted that the terms described in the present disclosure and the terms necessary for understanding the present disclosure may be replaced with terms having the same or similar meanings. For example, at least one of a channel and a symbol may be a signal (signaling). Furthermore, a signal may be a message. Moreover, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure may be represented by an absolute value, may be represented using a relative value from a predetermined value, or may be represented using other corresponding information. For example, the radio resource can be indicated by an index.

The name used for the above parameter should not be restrictive in any respect. In addition, formulas and the like that use these parameters may be different from those explicitly disclosed in the present disclosure. As the various channels (e.g., PUCCH, PDCCH, etc.) and information element can be identified by any suitable name, the various names assigned to these various channels and information elements should not be restrictive in any aspect.

In the present disclosure, terms such as "base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (e.g., three) cells (also referred to as sectors). In a case where the base station accommodates a plurality of cells, the entire coverage area of the base station can be divided into a plurality of smaller areas, and each of such smaller areas can provide a communication service by a base station subsystem (e.g., a small base station for indoor use (Remote Radio Head: RRH)).

The term "cell" or "sector" refers to a part of or all of the coverage area of at least one of a base station and a base station subsystem that performs a communication service in the relevant coverage.

In the present disclosure, the terms "mobile station (MS)", "user terminal", "user equipment (UE)", "terminal" and the like can be used interchangeably.

The mobile station is sometimes called by the persons skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmitting device, a receiving device, a communication device, or the like. Note that, at least one of the base station and the mobile station may be a device mounted on a moving body, a moving body itself, or the like. The moving body may be a vehicle (e.g., a car, an airplane, etc.), a moving body that moves unmanned (e.g., a drone, an automatically driven vehicle, etc.), or a robot (manned type or unmanned type). At least one of the base station and the mobile station also includes a device that does not necessarily move at the time of the communication operation. For example, at least one of the base station and the mobile station may be an Internet of Things (IoT) device such as a sensor.

Furthermore, a base station in the present disclosure may be read as a mobile station (user terminal, hereinafter the same). For example, the configuration in which the communication between the base station and the mobile station is replaced by a communication between a plurality of mobile stations (e.g., may be referred to as Device-to-Device (D2D), Vehicle-to-Everything (V2X), etc.) may be applied with each aspects/embodiment of the present disclosure. In this case, the mobile station may have the function of the base station. Words such as "uplink" and "downlink" may also be read with words corresponding to interterminal communication (e.g., "side"). For example, an uplink channel, a downlink channel, or the like may be read as a side channel.

Similarly, the mobile station in the present disclosure may be read as a base station. In this case, the base station may have the function of the mobile station.

A radio frame may be formed by one or more frames in the time domain. Each frame or frames in the time domain may be referred to as a subframe.
A subframe may also be formed by one or more slots in the time domain. The subframe may have a fixed time length (e.g., 1 ms) that does not depend on numerology.

The numerology may be a communication parameter applied to at least one of transmission and reception of a certain signal or channel. Numerology may indicate at least one of, for example, subcarrier spacing (SCS), bandwidth, symbol length, cyclic prefix length, transmission time interval (TTI), number of symbols per TTI, radio frame configuration, specific filtering process performed by a transmitter/receiver in a frequency domain, specific windowing process performed by a transmitter/receiver in the time domain, and the like.

A slot may be configured by one or more symbols (Orthogonal Frequency Division Multiplexing (OFDM) symbols, Single Carrier Frequency Division Multiple Access (SC-FDMA) symbols, etc.) in the time domain. A slot may be a time unit based on numerology.

The slot may include a plurality of minislots. Each minislot may be formed by one or more symbols in the time domain. The minislot may also be referred to as a subslot. A minislot may be formed by fewer number of symbols than the slot. The PDSCH (or PUSCH) transmitted in a time unit larger than a minislot may be referred to as PDSCH (or PUSCH) mapping type A. The PDSCH (or PUSCH) transmitted using the minislot may be referred to as PDSCH (or PUSCH) mapping type B.

The radio frame, subframe, slot, minislot, and symbol all represent a time unit for transmitting a signal. The radio frame, subframe, slot, minislot, and symbol may have different names corresponding to thereto.

For example, one subframe may be referred to as a transmission time interval (TTI), a plurality of consecutive subframes may be referred to as TTI, and one slot or one minislot may be referred to as TTI. That is, at least one of the subframe and the TTI may be a subframe in the existing LTE (1ms), a period shorter than 1ms (e.g., 1 to 13 symbols), or a period longer than 1ms. The unit representing TTI may be referred to as a slot, a minislot, and the like instead of a subframe.

Here, TTI refers to, for example, the minimum time unit of scheduling in the radio communication. For example, in the LTE system, the base station performs scheduling to allocate the radio resource (frequency bandwidth, transmission power etc. that can be used in each user terminal) in units of TTI to each user terminal. The definition of TTI is not limited thereto.

The TTI may be a transmission time unit of a channel-encoded data packet (transport block), a code block, a codeword, or the like, or a processing unit such as scheduling, link adaptation, or the like. When a TTI is given, the time interval (e.g., the number of symbols) in which the transport block, code block, codeword, and the like are actually mapped may be shorter than the TTI.

When one slot or one minislot is referred to as TTI, one or more TTIs (i.e., one or more slots or one or more minislots) may be the minimum time unit of scheduling. Furthermore, the number of slots (the number of minislots) forming the minimum time unit of the scheduling may be controlled.

The TTI having a time length of 1 ms may be referred to as usual TTI (TTI in LTE Rel. 8-12), normal TTI, long TTI, usual subframe, normal subframe, long subframe, slot, and the like. The TTI shorter than the usual TTI may be referred to as shortened TTI, short TTI, partial TTI (partial or fractional TTI), shortened subframe, short subframe, minislot, subslot, slot, and the like.

Note that the long TTI (e.g., usual TTI, subframe, etc.) may be read as a TTI having a time length of more than 1 ms, and the short TTI (e.g., shortened TTI) may be read as a TTI having a TTI length of less than the TTI length of the long TTI and greater than or equal to 1 ms.

The resource block (RB) is a resource allocation unit in the time domain and the frequency domain, and may include one or more continuous subcarriers in the frequency domain. The number of subcarriers included in the RB may be the same regardless of the numerology, and may be, for example, 12. The number of subcarriers included in the RB may be determined based on numerology.

Furthermore, the time domain of the RB may include one or more symbols, and may be have a length of one slot, one minislot, one subframe, or one TTI. One TTI, one subframe, and the like may be configured by one or more resource blocks.

Note that one or more RBs may be referred to as physical resource blocks (Physical RB: PRB), subcarrier groups (SubCarrier Group: SCG), resource element groups (Resource Element Group: REG), PRB pairs, RB pairs, and the like.

Furthermore, the resource block may be configured by one or more resource elements (Resource Element: RE). For example, one RE may be a radio resource region of one subcarrier and one symbol.

A bandwidth Part (BWP) (may also be referred to as partial bandwidth) may represent a subset of consecutive common RB (common resource blocks) for a certain neurology in a certain carrier. Here, the common RB may be specified by the index of the RB based on the common reference point of the carrier. The PRB may be defined in a BWP and numbered within that BWP.

The BWP may include a BWP for UL (UL BWP) and a BWP for DL (DL BWP). One or more BWPs may be set in one carrier for the UE.

At least one of the set BWPs may be active and the UE may not assume to transmit or receive a predetermined signal/channel outside the active BWP. Note that "cell", "carrier", and the like in the present disclosure may be read as "BWP".

The structures of the radio frame, subframe, slot, minislot, symbol, and the like described above are merely examples. For example, configurations such as the number of subframes included in a radio frame, the number of slots per subframe or radio frame, the number of minislots included in a slot, the number of symbols and RBs included in a slot or minislot, the number of subcarriers included in the RB, the number of symbols in the TTI, the symbol length, the cyclic prefix (CP) length, and the like can be variously changed.

The terms "connected", "coupled", or any variations thereof mean any direct or indirect connection or coupling between two or more elements, and one or more intermediate elements may exist between two elements "connected" or "coupled" to each other. The coupling or connection between the elements may be physical, logical, or a combination thereof. For example, "connection" may be read as "access". When used in the present disclosure, it can be considered that two elements are "connected" or "coupled" to each other by using at least one of one or more electric wires, cables, and printed electrical connections, and using electromagnetic energy having wavelengths in the radio frequency domain, the microwave range and optical (both visible and invisible) domain, and the like as some nonlimiting and non-inclusive examples.

The reference signal may be abbreviated as Reference Signal (RS) and may be referred to as pilot (Pilot) according to the applied standard.

The phrase "based on" as used in the present disclosure does not mean "based only on" unless clearly stated otherwise. In other words, the phrase "based on" means both "based only on" and "based at least on".

The "means" in the configuration of each of the above devices may be replaced with "unit", "circuit", "device", and the like.

Any reference to an element using designations such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some manner.

In the present disclosure, when "include", "including", and variations thereof are used, these terms are intended to be inclusive in a manner similar to the term "comprising". Furthermore, the term "or" used in the present disclosure is intended not to be an exclusive disjunction.

Throughout the present disclosure, for example, if articles such as "a", "an", and "the" in English are added due to translation, the present disclosure may include cases where the noun following these articles is in plurals.

The terms "judging" and "determining" as used in the present disclosure may include a wide variety of operations. "Judging" and "determining" may include, for example, regarding deciding, calculating, computing, processing, deriving, investigating, searching (looking up, search, inquiry) (e.g., searching in a table, a database, or another data structure), ascertaining, and the like as "judging" and "determining". Furthermore, "judging" and "determining" may include, for example, regarding receiving (e.g., receiving information), transmitting (e.g., transmitting information), input, output, and accessing (e.g., accessing data in a memory) as "judging" and "determining". In addition, "judging" and "determining" may include regarding resolving, selecting, choosing, establishing, comparing and the like as "judging" and "determining". That is, "judging" and "determining" may include regarding some operations as "judging" and "determining". Furthermore, "judgement (determination)" may be read as "assuming", "expecting", "considering", and the like.

In the present disclosure, the term "A and B are different" may mean "A and B are different from each other". It should be noted that the term may mean "A and B are each different from C". Terms such as "separated", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

Reference Signs List

    10 radio communication system
    50 CU
    100A, 100B, 100C radio communication node
    110 radio transmitting unit
    120 radio receiving unit
    130 NW IF unit
    140 control unit
    150 IAB node capability information acquiring unit
    155 TA type transmitting unit
    161 radio transmitting unit
    162 radio receiving unit
    165 capability information transmitting unit
    170 control unit
    UE 200
    1001 processor
    1002 memory
    1003 storage
    1004 communication device
    1005 input device
    1006 output device
    1007 bus

**Claims**

1.   A radio communication node comprising:

a transmitting/receiving unit that transmits and receives a radio signal to and from a lower node; and
a control unit that recognizes whether or not the lower node includes at least one of a plurality of transceivers
or a plurality of antenna panels by an implicit or explicit notification from the lower node.

2.   The radio communication node according to claim 1, wherein the control unit acquires capability information indicating
whether or not at least one of the plurality of transceivers and the plurality of antenna panels are provided from the
lower node.

3.   A radio communication node comprising:

a transmitting/receiving unit that transmits and receives a radio signal to and from an upper node; and
a control unit that reports to the upper node implicitly or explicitly whether or not the radio communication node
corresponds to at least one of a combination of adjustments of a downlink transmission timing and an uplink
transmission timing and a combination of adjustments of the downlink transmission timing and the uplink reception timing.

4.   A radio communication node comprising:

a transmitting/receiving unit that transmits and receives a radio signal to and from a lower node; and
a control unit that notifies the lower node implicitly or explicitly whether or not the radio communication node is
transmitting timing information based on either a combination of adjustments of a downlink transmission timing
and an uplink transmission timing and a combination of adjustments of the downlink transmission timing and
the uplink reception timing.

FIG. 1

EP 4 138 432 A1

# FIG. 2

(TRANSCEIVER/ANTENNA PANEL IMPLEMENTATION, TA TYPE)

100A — Parent node

100B — IAB node

Child node

DL Parent BH →
← Link_parent
UL Parent BH

DL Child BH →
← Link_child
UL Child BH

| MT | DU |   (COMPATIBILITY OF CASE #6, 7)

| MT | DU |

| MT | DU |

DL Access
UL Access

200

EP 4 138 432 A1

## FIG. 3

## FIG. 4

FIG. 5

## FIG. 6

| Multiplexing Capability | TDM | Not required | | | | | | Required | | | |
|---|---|---|---|---|---|---|---|---|---|---|---|
| | MT | Tx | | Tx | Rx | Rx | | Tx | Tx | Rx | Rx |
| | DU | Tx | | Rx | Tx | Rx | | Tx | Rx | Tx | Rx |
| Transceiver/ Antenna panel | | Multiple | Single | – | – | Multiple | Single | – | – | – | – |
| Tx/Rx timingsync. | | Case#1 | Case#6 | Case#1 | Case#1 | Case#1 | Case#7 | Case#1 | Case#1 | Case#1 | Case#1 |
| DL power control | | – | – | – | – | Necessary | Necessary | – | – | – | – |

EP 4 138 432 A1

# FIG. 7

EP 4 138 432 A1

# FIG. 8

50,100A,100B,100C

1001 PROCESSOR

1007

1004 COMMUNICATION DEVICE

1002 MEMORY

1005 INPUT DEVICE

1003 STORAGE

1006 OUTPUT DEVICE

## INTERNATIONAL SEARCH REPORT

| International application No. |
|---|
| PCT/JP2020/005633 |

**A. CLASSIFICATION OF SUBJECT MATTER**
Int. Cl. H04W8/22(2009.01)i, H04W16/26(2009.01)i, H04W16/28(2009.01)i, H04W92/20(2009.01)i, H04W28/06(2009.01)i
FI: H04W8/22, H04W28/06 130, H04W16/28, H04W92/20 110, H04W16/26
According to International Patent Classification (IPC) or to both national classification and IPC

**B. FIELDS SEARCHED**

Minimum documentation searched (classification system followed by classification symbols)
Int. Cl. H04W8/22, H04W16/26, H04W16/28, H04W92/20, H04W28/06

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | 3rd Generation Partnership Project; Technical Specification Group Radio Access Network; NR; Study on Integrated Access and Backhaul; (Release 16) [online], 3GPP TR 38.874 V16.0.0, 10 January 2019, pp. 19-25, pp. 19-25 | 1, 2 |
| Y | Huawei, HiSilicon, Summary of 7.2.3.1Extensions of SSBs for inter-IAB-node discovery and measurements[online], 3GPP TSG RAN WG1 #98 R1-1909542, 03 September 2019, p. 2, p. 2 | 1, 2 |
| X | NTT DOCOMO, INC., Discussion on enhancements to support NR backhaul links[online], 3GPP TSG RAN WGI #95 R1-1813316, 03 November 2018, pp. 7-9, pp. 7-9 | 3, 4 |

☐ Further documents are listed in the continuation of Box C.    ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 14.09.2020 | 24.09.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/005633

This International Searching Authority found multiple inventions in this international application, as follows:

Document 1: 3rd Generation Partnership Project; Technical Specification Group Radio Access Network; NR; Study on Integrated Access and Backhaul; (Release 16) [online], 3GPP TR 38.874 V16.0.0, 10 January 2019, pp. 19-25, pp. 19-25

The claims are classified into the following three inventions.

(Invention 1) Claims 1-2

Claims 1-2 have a special technical feature of in which a wireless communication node is provided with "a control unit for recognizing, by implicit or explicit notification from the lower node, whether or not the lower node comprises a plurality of transceivers and/or a plurality of antenna panels," and are therefore classified as invention 1.

(Invention 2) Claim 3

Claim 3 shares with claim 1 classified as invention 1 the feature in which the wireless communication node comprises "a transmitting/receiving unit for transmitting/receiving a wireless signal to/from a node." However, this feature does not make a contribution over the prior art in the light of the content disclosed in document 1, and thus cannot be said to be a special technical feature. Moreover, no other identical or corresponding special technical feature exists between claim 3 and claim 1.

In addition, claim 3 is not a dependent claim of claim 1. Furthermore, claim 3 is not substantially identical to or similarly closely related to any of the claims classified as invention 1.

As such, claim 3 cannot be classified as invention 1.

Claim 3 does have a special technical feature of being provided with "a control unit for implicitly or explicitly reporting, to the upper node, whether or not the wireless communication node supports at least either the combination of adjustment of the downlink transmission timing and the uplink transmission timing or the combination of adjustment of the downlink transmission timing and the uplink receipt timing," and is therefore classified as invention 2.

Form PCT/ISA/210 (extra sheet) (January 2015)

**INTERNATIONAL SEARCH REPORT**

International application No.

PCT/JP2020/005633

(Invention 3) Claim 4

Claim 4 shares with claim 1 classified as invention 1 and claim 3 classified as invention 2 the feature in which the wireless communication node is provided with "a transmitting/receiving unit for transmitting/receiving a wireless signal to/from a node." However, this feature does not make a contribution over the prior art in the light of the content disclosed in document 1, and thus cannot be said to be a special technical feature. In addition, no other identical or corresponding special technical feature exists between claim 4 and claim 1 or 3.

Moreover, claim 4 is not a dependent claim of claim 1 or 3. Furthermore, claim 4 is not substantially identical to or similarly closely related to any of the claims classified as invention 1 or 2.

As such, claim 4 cannot be classified as invention 1 or 2.

Claim 4 does have a special technical feature of being provided with "a control unit for implicitly or explicitly notifying the lower node of whether the wireless communication node is transmitting timing information based on the combination of adjustment of the downlink transmission timing and the uplink transmission timing or the combination of adjustment of the downlink transmission timing and the uplink receipt timing," and is therefore classified as invention 3.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Technical Specification Group Radio Access Network; NR; Study on Integrated Access and Backhaul; (Release 16). *3GPP TR 38.874 V16.0.0, 3rd Generation Partnership Project,* December 2018

- New WID on Enhancements to Integrated Access and Backhaul. *RP-193251, 3GPP TSG RAN Meeting #86, 3GPP,* December 2019